# EUROPEAN PATENT APPLICATION

(11) **EP 4 660 749 A1**
(43) Date of publication of application: **10.12.2025**
(21) Application number: 24856691.1
(22) Date of filing: 31.07.2024
(51) Int. Cl.: G06F 1/16, H04N 5/64

(54) **BRIDGE DEVICE AND DISPLAY DEVICE**

(30) Priority: 23.08.2023 KR 20230110340
(71) Applicant: Samsung Electronics Co., Ltd., Suwon-si, Gyeonggi-do 16677 (KR)
(72) Inventor: CHOI, Suan, Suwon-si Gyeonggi-do 16677 (KR); CHUN, Bumho, Suwon-si Gyeonggi-do 16677 (KR); KIM, Dongwook, Suwon-si Gyeonggi-do 16677 (KR); SEO, Soonsuk, Seoul 08525 (KR)
(74) Representative: Gulde & Partner
(86) International application number: PCT/KR2024/011264
(87) International publication number: WO 2025/042078

(57) **Abstract**

A bridge device is disclosed. The bridge device may comprise: a first cover having flexibility; a second cover having flexibility; a support member disposed between the first cover and the second cover; a first connector fixed to the support member; and a second connector fixed to the support member and electrically connected to the first connector. The bridge device may be configured to be connectable to a first display device and a second display device, and when the bridge device is connected to the first display device and the second display device, the first display device and the second display device may be electrically connected through the first connector and the second connector. The first display device and the second display device can rotate with respect to each other by the flexibility of the first cover and the flexibility of the second cover.

## Description

### [Technical Field]

The present invention relates to a bridge device that connects a plurality of display devices electrically and physically, and to a plurality of display devices capable of maintaining various folding angles by the bridge device.

### [Background Art]

In general, a display is a device that displays a screen, such as a monitor or television. Display devices use emissive display panels, such as organic light-emitting diodes or micro light-emitting diodes, and non-emissive display panels, such as liquid crystal display panels.

### [Detailed Description of the Disclosure]

### [Technical Solution]

Aspects of embodiments of the disclosure will be set forth in part in the description which follows and, in part, will be apparent from the description, or may be learned by practice of the presented embodiments.

According to an embodiment of the disclosure, a bridge device includes a first cover having flexibility; a second cover having flexibility; a support member between the first cover and the second cover; a first connector fixed to the support member; and a second connector fixed to the support member and electrically connected to the first connector, wherein the bridge device is configured to be connectable to a first display device and a second display device so that, when the bridge device is connected to the first display device and the second display device, the first display device and the second display device are electrically connected through the first connector and the second connector, and the first display device and the second display device are rotatable relative to one another due to the flexibility of the first cover and the flexibility of the second cover.

According to an embodiment of the disclosure, the support member may include a bending member configured to be bendable, a first reinforcement plate connected to a first side of the bending member, and a second reinforcement plate connected to a second side of the bending member. The bending member may be centered along a horizontal direction of the first cover and the second cover.

According to an embodiment of the disclosure, the first connector may include a plurality of first terminals. The second connector may include a plurality of second terminals. The bridge device may further includes a flexible printed circuit board (FPCB) connecting the first connector and the second connector. The FPCB may include wiring connecting the plurality of first terminals of the first connector and the plurality of second terminals of the second connector.

According to an embodiment of the disclosure, each terminal of the plurality of first terminals and each terminal of the plurality of second terminals may be a pogo pin.

According to an embodiment of the disclosure, the first connector may be detachably attachable to a rear surface of the first display device with a plurality of first permanent magnets. The second connector may be detachably attachable to a rear surface of the second display device with a plurality of second permanent magnets.

According to an embodiment of the disclosure, the first reinforcement plate and the second reinforcement plate may include a magnetic material.

According to an embodiment of the disclosure, a display device includes a first display device; a second display device; and a bridge device detachably connected to the first display device and the second display device to electrically connect the first display device and the second display device together and so that the second display device is physically supported by the first display device, wherein the bridge device has flexibility so that the first display device and the second display device are rotatable relative to one another.

According to an embodiment of the disclosure, the bridge device may be configured to connect the first display device and the second display device so that a side of the first display device and a side of the second display device facing the side of the first display device contact each other when the first display device and the second display device are rotated relative to each other at a predetermined angle. A tangent line of the side of the first display device and the side of the second display device facing the side of the first display device may form a center of rotation of the first display device and the second display device.

According to an embodiment of the disclosure, the side of the first display device and the side of the second display device facing the side of the first display device may each be arcuate.

According to an embodiment of the disclosure, the bridge device may include a first connector and a second connector. The display device may further include a first docking member on the first display device and detachably connected to the first connector of the bridge device, the first docking member configured to be movable relative to the first display device, and a second docking member on the second display device and detachably connected to the second connector of the bridge device, the second docking member configured to be movable relative to the second display device.

According to an embodiment of the disclosure, the first docking member may be connected to the first display device so as to be slidable and elastically biased along a direction in which the first display device is rotated relative to the second display device. The second docking member may be connected to the second display device so as to be slidable and elastically biased along a direction in which the second display device is rotated relative to the first display device.

According to an embodiment of the disclosure, the first docking member may include a first docking groove into which the first connector is inserted. The second docking member may include a second docking groove into which the second connector is inserted. The first display device may include a first docking aperture on a rear surface of the first display device, the first docking aperture having a width greater than a width of the first docking groove, so that the first docking member is movable relative to the first display device. The second display device may include a second docking aperture on a rear surface of the second display device, the second docking aperture having a width greater than a width of the second docking groove, so that the second docking member is movable relative to the second display device.

According to an embodiment of the disclosure, the bridge device may include a first cover having flexibility, a second cover having flexibility, a bending member having flexibility, a first reinforcement plate connected to a first side of the bending member and to the first connector, a second reinforcement plate connected to a second side of the bending member and to the second connector, and a flexible printed circuit board (FPCB) connecting the first connector and the second connector. The first display device and the second display device may be electrically connected through the first connector and the second connector. The first cover, the second cover, and the FPCB may be flexible, and the bending member may be bendable, so that the first display device and the second display device may be rotatable relative to one another.

According to an embodiment of the disclosure, the first docking member and the first connector may be detachably attached by a magnetic force between the first docking member and the first connector. The second docking member and the second connector may be detachably attached by a magnetic force between the second docking member and the second connector.

According to an embodiment of the disclosure, the first docking member may include a plurality of first terminals. The first connector may include a plurality of first pogo pins electrically connected to the plurality of first terminals provided on the first docking member. The second docking member may include a plurality of second terminals. The second connector may include a plurality of second pogo pins electrically connected to the plurality of second terminals provided on the second docking member.

### [Brief Description of Drawings]

The above and other aspects, features, and advantages of certain embodiments of the disclosure will be more apparent from the following description taken in conjunction with the accompanying drawings, in which:
FIG. 1 is a view illustrating an example in which a plurality of display devices are electrically and physically connected by a bridge device according to one or more embodiments;
FIG. 2 is a view illustrating a state before a plurality of display devices are connected by a bridge device according to one or more embodiments;
FIG. 3 is a perspective view illustrating a lid applied to a display device according to one or more embodiments;
FIG. 4 is a view illustrating a folding operation of a plurality of display devices connected by a bridge device according to one or more embodiments;
FIG. 5 is an enlarged view of part A shown in FIG. 4;
FIGS. 6 and 7 are exploded views illustrating a bridge device according to one or more embodiments;
FIG. 8 is a front view illustrating a bridge device according to one or more embodiments;
FIG. 9 is a cross-sectional view along line B-B' shown in FIG. 8;
FIG. 10 is an enlarged view of part C shown in FIG. 9;
FIGS. 11 and 12 are perspective views illustrating a docking member of a bridge device according to one or more embodiments;
FIG. 13 is a view illustrating an example in which a docking member of a bridge device is elastically disposed on a display device according to one or more embodiments;
FIG. 14 is a view illustrating an example in which a portion of a docking member of a bridge device is exposed to a rear surface of a display device according to one or more embodiments;
FIG. 15 is a perspective view illustrating a plurality of wheel stoppers provided in a display device according to one or more embodiments;
FIG. 16 is an enlarged view illustrating part D shown in FIG. 15;
FIG. 17 is an exploded view illustrating a plurality of stoppers provided in a display device according to one or more embodiments;
FIG. 18 is a view illustrating a plurality of stoppers provided in a display device according to one or more embodiments;
FIG. 19 is a block diagram illustrating a display device according to one or more embodiments;
FIG. 20 is a view illustrating an example of a user interface for selecting various devices connected to a first display device according to one or more embodiments;
FIG. 21 is a top view illustrating an example in which a pair of display devices are folded in opposite directions from each other according to one or more embodiments;
FIG. 22 is a top view illustrating an example in which three display devices are folded to form a roughly triangle shape according to one or more embodiments;
FIG. 23 is a front view illustrating an example in which an auxiliary display device is provided using a bridge device on top of a display device according to one or more embodiments; and
FIG. 24 is a front view illustrating an example in which a plurality of display devices are disposed in a vertical direction and each display device is connected by a plurality of bridge devices according to one or more embodiments.

### [Detailed Description of Embodiments]

The embodiments described herein and the configurations illustrated in the drawings are only one or more preferred embodiments, and there are many variations that may be substituted for the embodiments and drawings described herein at the time of filing of this application.

In this disclosure, identical reference numerals or symbols in each drawing designate parts or components that perform substantially the same function.

The terminology used in this disclosure is for the purpose of describing embodiments and is not intended to limit and/or define the disclosed invention. Expressions in the singular include the plural unless the context clearly indicates otherwise. In this specification, the terms "including" or "having" and the like are intended to designate the presence of the features, numbers, steps, operations, components, parts, or combinations thereof described, and not to preclude the possibility of the presence or addition of one or more other features, numbers, steps, operations, components, parts, or combinations thereof.

Here, terms including ordinal numbers, such as "first," "second," and the like, may be used to describe various components, but the components are not limited by such terms, and such terms are used only to distinguish one component from another. For example, without departing from the scope of the present disclosure, a first component may be named a second component, and similarly, a second component may be named a first component. The term "and/or" includes any combination of a plurality of related recited items or any one of a plurality of related recited items.

In the disclosure, the terms "front end," "rear end," "top," "bottom," "front," "rear," "top surface," "bottom surface," "upper end," "lower end," "one end," "other end," "left," and "right" are defined with reference to the drawings and are not intended to limit the shape and location of any component.

Hereinafter, a bridge device according to one or more embodiments will be described with reference to the accompanying drawings.

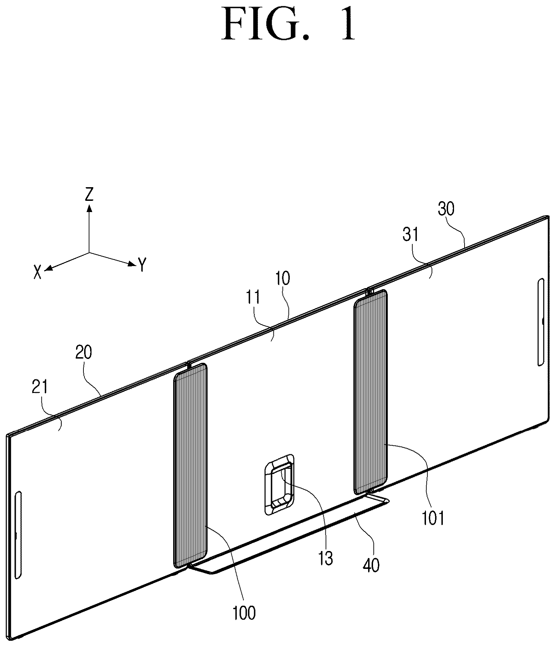

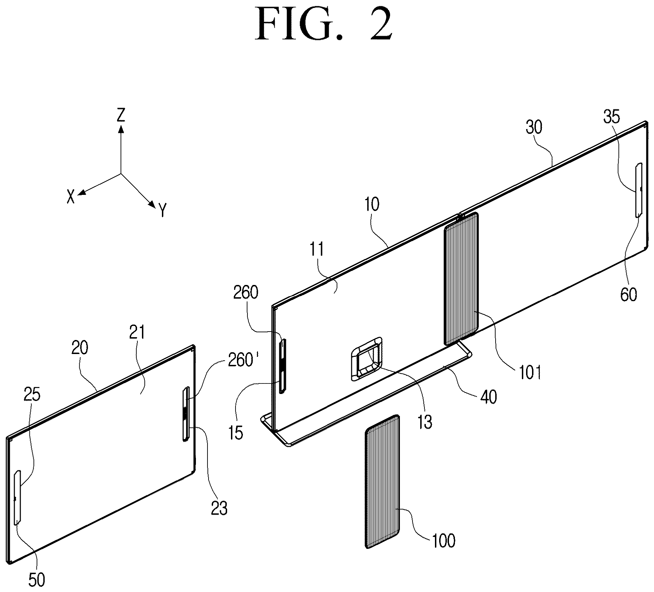

FIG. 1 is a view illustrating an example in which a plurality of display devices are electrically and physically connected by a bridge device according to one or more embodiments. FIG. 2 is a view illustrating a state before a plurality of display devices are connected by a bridge device according to one or more embodiments. In various embodiments of the present disclosure, a bridge device refers to a device for connecting a plurality of devices to each other. A bridge device may be referred to as various other terms, such as a connection device, a link device, a combine device, an assemble device, and the like.

A bridge device according to one or more embodiments may electrically and physically connect two display devices. The present disclosure describes an example of connecting three display devices using two bridge devices. Similarly, when n bridge devices according to one or more embodiments are used, n+1 display devices may be connected electrically and physically.

Referring to FIG. 1, a bridge device according to one or more embodiments may include a first bridge device 100 capable of electrically and physically connecting a first display device 10 and a second display device 20, and a second bridge device 101 capable of electrically and physically connecting the first display device 10 and a third display device 30.

The first bridge device 100 may be disposed on one side of a rear surface 11 of the first display device 10 and on one side of a rear surface 21 of the second display device 20. The second bridge device 101 may be disposed on the other side of the rear surface 11 of the first display device 10 and on one side of a rear surface 31 of the third display device 30. Accordingly, the first bridge device 100 and the second bridge device 101 may not be visible from the front of the first, second, and third display devices 10, 20, and 30.

The second display device 20 may be disposed on the left side of the first display device 10, and the third display device 30 may be disposed on the right side of the first display device 10. As the first display device 10 is connected to a stand 40 at the bottom, the first, second, and third display devices 10, 20, and 30 may be provided approximately perpendicular to a table or floor.

The first, second, and third display devices 10. 20, 30 may be monitors or televisions (TVs). A port 13 may be provided on the rear surface 11 of the first display device 10. The first display device 10 may receive external power and transmit and receive signals via the port 13. The port 13 of the first display device 10 may be connected to a separate device (e.g., a personal computer (PC), a video game console, a digital set-top box, etc.). The ports 13 of the first display device 10 may include video and audio terminals (e.g., digital visual interface (DVI), high-definition multimedia interface (HDMI), display port (DP), D-sub, sony/philips digital interface (S/PDIF), universal serial bus (USB) type port, etc.), power ports, communication ports, etc.

The first display device 10 may be a monitor or a television, but may also be an all in one PC in which a display panel and control device are integrated.

The second display device 20 and the third display device 30 may receive power and signals from the first display device 10 via the first bridge device 100 and the second bridge device 101, respectively. Accordingly, the second display device 20 and the third display device 30 may not include separate ports for connecting separate cables.

The second display device 20 may receive power from the first display device 10 via the first bridge device 100. The second display device 20 may transmit and receive signals to and from the first display device 10 or a separate control device connected to the first display device 10 via the first bridge device 100. The third display device 30 may receive power from the first display device 10 via the second bridge device 101. The third display device 30 may transmit and receive signals to and from the first display device 10 or a separate control device connected to the first display device 10 via the second bridge device 101.

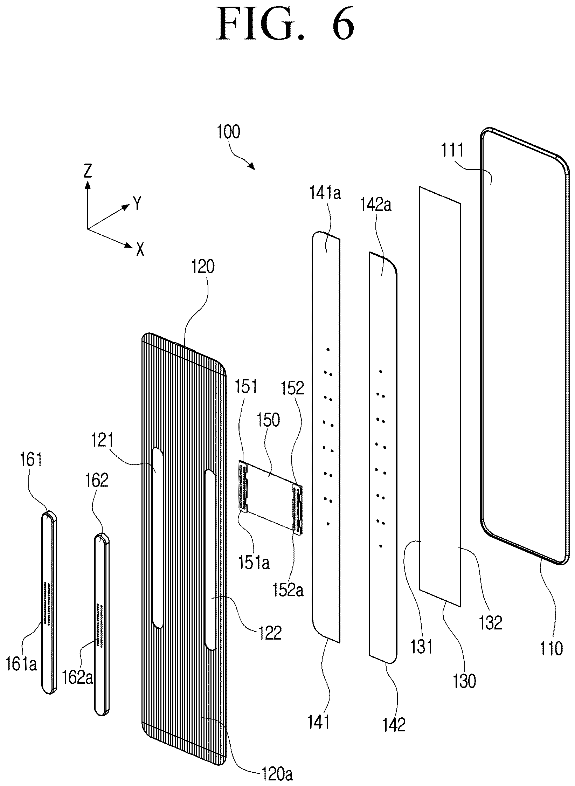

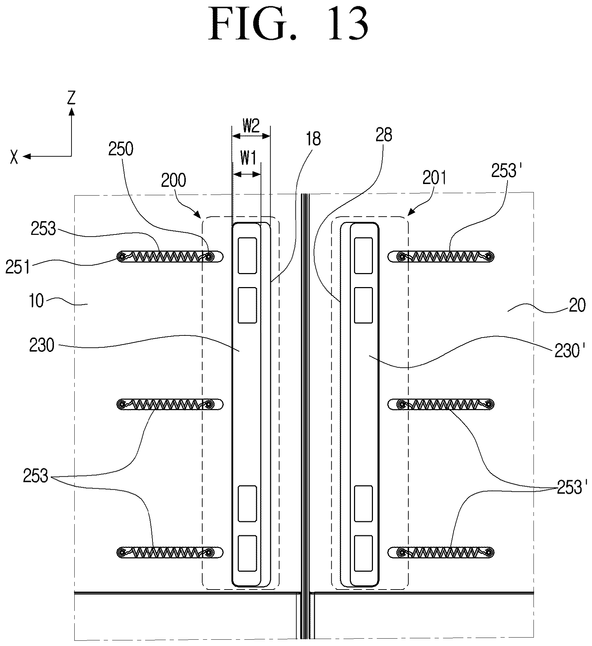

Referring to FIG. 2, the first, second, and third display devices 10, 20, and 30 may each be provided with docking apertures on both sides of the rear surface. In this case, a first coupling member 161 (see FIG. 6) and a second coupling member 162 (see FIG. 6) of the first bridge device 100 may be electrically and physically connected to a first docking member 200 (see FIG. 13) and a second docking member 201 (see FIG. 13), respectively, via a first docking aperture 15 of the first display device 10 and a second docking aperture 23 of the second display device 20, respectively.

The first docking aperture 15 of the first display device 10 may expose a first docking groove 260 of the first docking member 200 elastically movably provided on an inner side of the first display device 10. The second docking aperture 23 of the second display device 20 may expose a second docking groove 260' of the second docking member 201 elastically movably provided on the inner side of the second display device 20.

The first docking aperture 15 of the first display device 10 and the second docking aperture 23 of the second display device 20 are open because the first bridge device 100 is connected. In this case, a third docking aperture 25 of the second display device 20 and a fourth docking aperture 35 of the third display device 30, to which the bridge device is not connected, may be closed by a first lid 50 and a second lid 60, respectively.

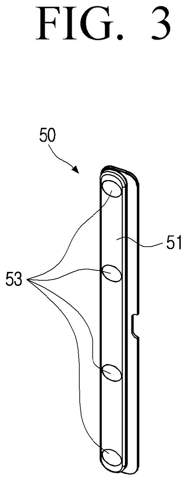

Since the first lid 50 and the second lid 60 are substantially identical, hereinafter, the description of the second lid 60 will be omitted and the first lid 50 will be described with reference to the drawing. FIG. 3 is a perspective view illustrating a lid applied to a display device according to one or more embodiments.

Referring to FIG. 3, the first lid 50 may have an outline corresponding to the third docking aperture 25 of the second display device 20. A protrusion 51 may be formed on one side of the first lid 50. The protrusion 51 of the first lid 50 may be provided to correspond to a third docking groove (not shown) of a third docking member (not shown) corresponding to the third docking aperture 25. Here, the third docking groove of the third docking member may be configured substantially the same as the first docking groove 260 of the first docking member 200.

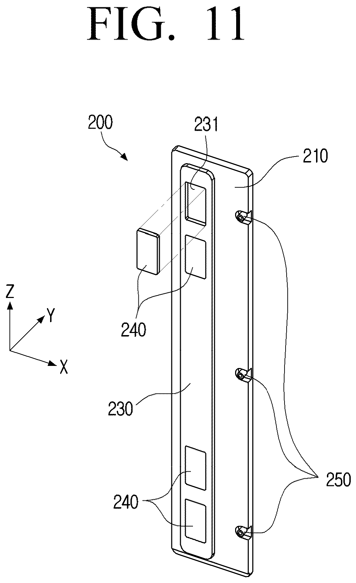

The protrusions 51 of the first lid 50 may be provided with a plurality of permanent magnets 53 at regular intervals. When the protrusions 51 of the first lid 50 are inserted into the docking groove of the third docking member, the first lid 50 may be detachably coupled to the first docking member 200 by an attractive force between the plurality of permanent magnets 53 of the first lid 50 and a plurality of permanent magnets (not shown) provided on the third docking member. Accordingly, the first lid 50 may easily close or open the third docking aperture 25 of the second display device 20 by magnetic force. Here, the plurality of permanent magnets of the third docking member may be configured substantially the same as a plurality of permanent magnets 240 of the first docking member 200 (see FIG. 11).

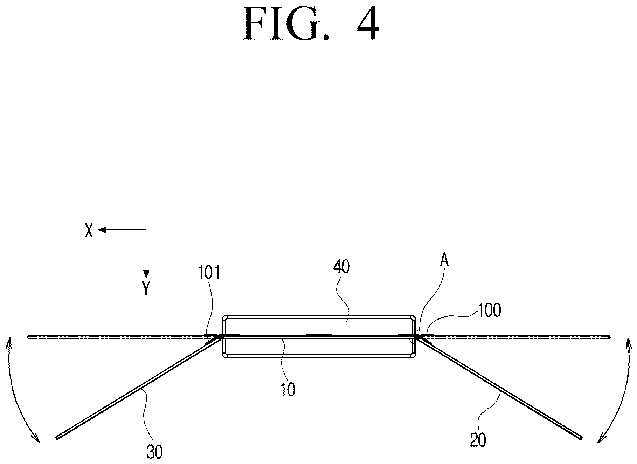

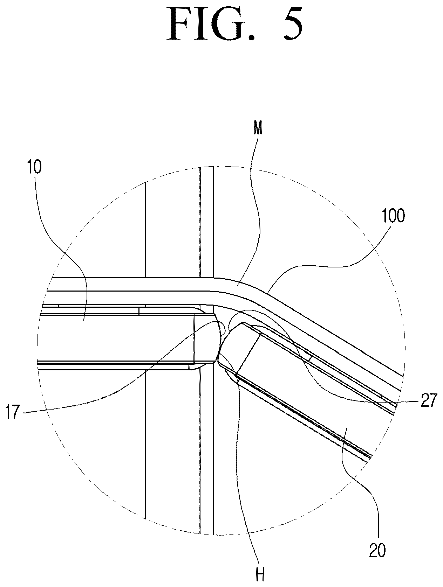

FIG. 4 is a view illustrating a folding operation of a plurality of display devices connected by a bridge device according to one or more embodiments. FIG. 5 is an enlarged view of part A shown in FIG. 4.

Referring to FIG. 4, the second display device 20 and the third display device 30 may be folded at a predetermined angle with respective to the first display device 10 by the first bridge device 100 and the second bridge device 101, respectively. The first bridge device 100 and the second bridge device 101 may be made of a bendable structure and material. The structure and material of the first bridge device 100 and the second bridge device 101 will be described later.

Referring to FIG. 5, when the second display device 20 is folded at a predetermined angle with respect to the first display device 10, a side surface 17 of the first display device 10 and a side surface 27 of the second display device 20 come into contact with each other. In this case, the side surface 17 of the first display device 10 and the side surface 27 of the second display device 20 may have a predetermined curved surface to protrude in a direction of facing each other. The curvature of the side surface 17 of the first display device 10 and the side surface 27 of the second display device 20 may be substantially the same.

The side surface 17 of the first display device 10 and the side surface 27 of the second display device 20 may be in line contact along a vertical direction of the first display device 10 and the second display device 20. In this case, the tangent line formed by the contact of the side surface 17 of the first display device 10 and the side surface 27 of the second display device 20 may function as a hinge axis H, which is a center of rotation of the first display device 10 and the second display device 20.

For example, when the first display device 10 and the second display device 20 are disposed parallel to each other and the second display device 20 is folded to the front of the second display device 20, the second display device 20 rotates about the hinge axis H. The hinge axis H will not be fixed at a point, but moves from the rear of the second display device 20 to the front of the second display device 20.

The first bridge device 100 has a bent center portion M of the first bridge device 100 such that the first display device 10 does not interfere with the rotation of the second display device 20 about the hinge axis H. Accordingly, the second display device 20 may be smoothly folded at a predetermined angle with respect to the first display device 10.

Since the first bridge device 100 and the second bridge device 101 are substantially identical, hereinafter, the description of the second bridge device 101 will be omitted and the first bridge device 100 will be described with reference to the drawings.

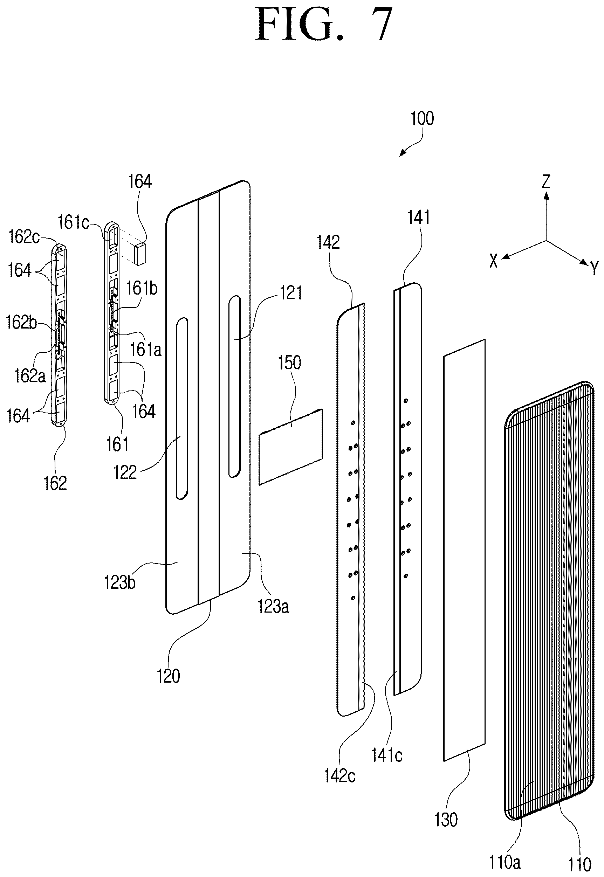

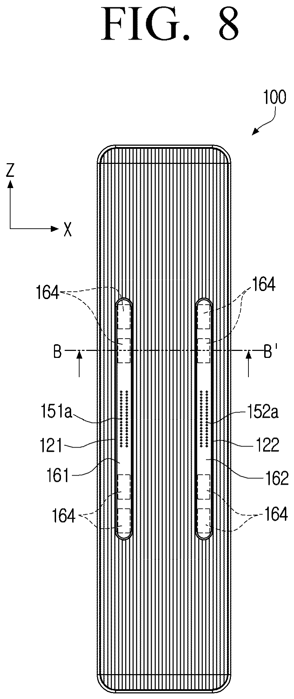

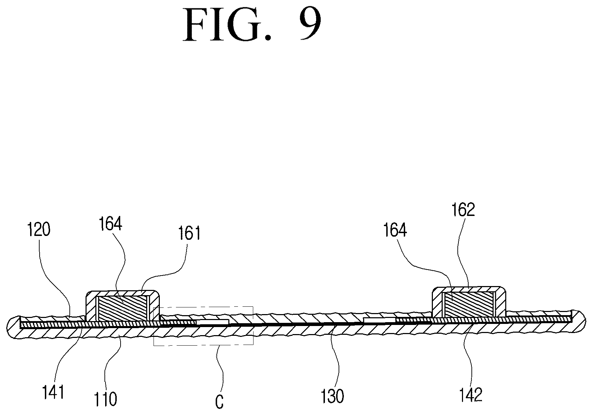

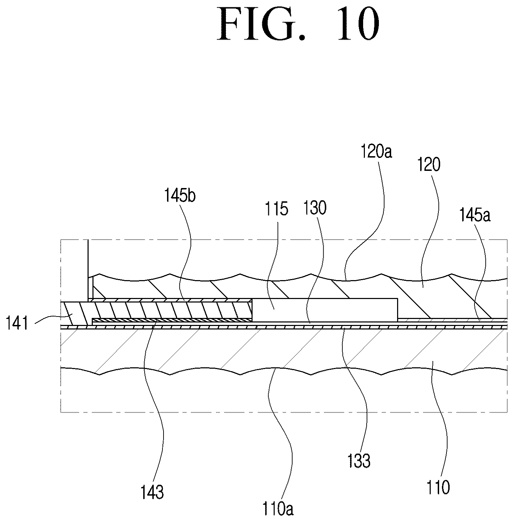

FIGS. 6 and 7 are exploded views illustrating a bridge device according to one or more embodiments. FIG. 8 is a front view illustrating a bridge device according to one or more embodiments. FIG. 9 is a cross-sectional view along line B-B' shown in FIG. 8. FIG. 10 is an enlarged view illustrating part C shown in FIG. 9.

Referring to FIGS. 6 to 9, the first bridge device 100 may include a first cover 110, a second cover 120 corresponding to the first cover 110, a support member disposed between the first cover 110 and the second cover 120, a flexible printed circuit board (FPCB) 150 for electrically connecting the first display device 10 and the second display device 20, and the first coupling member 161 and the second coupling member 162 to which both sides of the FPCB 150 are fixed.

The first cover 110 may have a predetermined length in a vertical direction of the first display device 10 and the second display device 20. The length of the first cover 110 (the length along a Z-axis direction) may be less than the longitudinal length of the first display device 10 and the second display device 20. For example, the length of the first cover 110 may be approximately 70 to 99% of the longitudinal length of the first display device 10 and the second display device 20 (see FIG. 1). Such a length of the first cover 110 may be such that the first cover 110 is not obscured by the first display device 10 and the second display device 20 and exposed to the front of the first display device 10 and the second display device 20, and that the first cover 110 prevents the first display device 10 and the second display device 20 from twisting in opposite directions about the x-axis of FIG. 1.

The first cover 110 may be made of a material that has flexibility and toughness. For example, the first cover 110 may be made of rubber or an elastic synthetic resin. The first cover 110 may be smoothly bendable about the Z-axis and may have a plurality of first grooves 110a formed on the outer surface of the first cover 110 along the longitudinal direction of the first cover 110 to minimize twisting about the X-axis.

The first cover 110 may be provided with a receiving groove 111 on one side where the second cover 120 is coupled. A receiving groove 115 of the first cover 110 may accommodate a bending member 130, a first reinforcement plate 141, a second reinforcement plate 142, and a FPCB 150. The second cover 120 may be coupled to the first cover 110 after the bending member 130, the first reinforcement plate 141, the second reinforcement plate 142, and the FPCB 150 are accommodated in the receiving groove 115 of the first cover 110. Accordingly, the bending member 130, the first reinforcement plate 141, the second reinforcement plate 142, and the FPCB 150 are disposed between the first cover 110 and the second cover 120 and may be protected from external impact.

The second cover 120 may have a plurality of second grooves 120a formed along the longitudinal direction of the second cover 120 on its outer surface, similar to the first cover 110. The second cover 120 may be made of the same material as the first cover 110.

The support member may include a bending member 130, and a first reinforcement plate 141 and a second reinforcement plate 142 connected by the bending member 130.

The bending member 130 may be made of a flexible plastic film. The bending member 130 may be disposed along the longitudinal direction of the first cover 110. The bending member 130 may be disposed in the middle portion of the first bridge device 100. In this case, the bending member 130 may be attached to the receiving groove 111 of the first cover 110 by a first adhesive member 133. The first adhesive member 133 (see FIG. 10) may be, for example, an easy-to-use double-sided adhesive tape.

The first reinforcement plate 141 and the second reinforcement plate 142 may be coupled to both sides of the bending member 130, respectively, along the longitudinal direction of the bending member 130. For example, the first reinforcement plate 141 may have a rear side 141c attached to a front side 131 of the bending member 130 by an adhesive member 143 (e.g., double-sided adhesive tape). The second reinforcement plate 142 may have a rear side 142c attached to the other front side 132 of the bending member 130 by an adhesive member. In addition, the respective front sides 141a, 142a of the first reinforcement plate 141 and the second reinforcement plate 142 and the rear both sides 123a, 123b of the second cover 120 may be connected by a second adhesive member 145a (see FIG. 10) and a third adhesive member 145b (see FIG. 10). The second adhesive member 145a and the third adhesive member 145b may be, for example, an easy-to-use double-sided adhesive tape.

The FPCB 150 may electrically connect the first display device 10 and the second display device 20. The FPCB 150 may have a first connector 151 and a second connector 152 mounted on both ends. The first connector 151 and the second connector 152 may each be provided with a plurality of pogo pins 151a, 152a. The plurality of pogo pins 151a, 152a may each include a barrel made of a conductive metal and a plunger elastically supported on a coil spring embedded in the barrel and coupled to a leading end of the barrel to enable forward and backward movement.

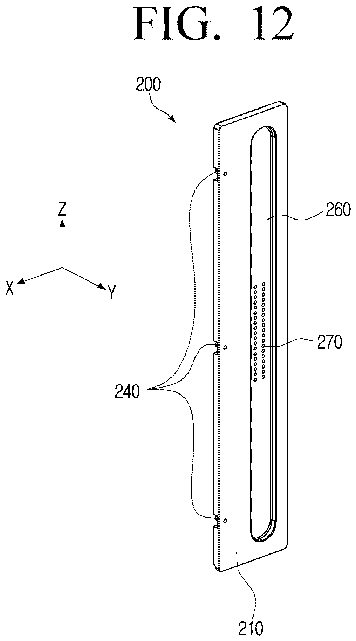

The first connector 151 may be electrically connected to the first display device 10. For example, the first connector 151 may be electrically connected to a first docking member 200 provided on the first display device 10. The first docking member 200 may include a printed circuit board 210 (see FIG. 12) having a plurality of terminals 270 (see FIG. 12) to which the plurality of pogo pins 151a of the first connector 151 are electrically connected. The printed circuit board 210 of the first docking member 200 may be electrically connected to a separate printed circuit board (not shown) provided on the first display device 10. In this case, the first docking member 200 may also be movable during the bending operation of the first bridge device 100. Accordingly, the printed circuit board 210 of the first docking member 200 may be electrically connected to the printed circuit board of the first display device 10 via a separate FBCB (not shown).

The second connector 152 may be electrically connected to the second display device 20. For example, the second connector 152 may be electrically connected to a second docking member 201 provided on the second display device 20. The second connector 152 may have the same construction as the first connector 151.

The first coupling member 161 may be coupled to the first reinforcement plate 141 through a first through-aperture 121 provided in the second cover 120. For example, the first coupling member 161 may be secured to the first reinforcement plate 141 via a plurality of screws.

The first coupling member 161 may be removably inserted into the first docking groove 260 of the first docking member 200. The first coupling member 161 may be provided with a connector coupling groove 161a at an approximately center portion of the rear surface, into which the first connector 151 is coupled. The connector coupling groove 161a may be provided with a plurality of pin apertures 161b into which the plurality of pogo pins 151a of the first connector 151 are inserted.

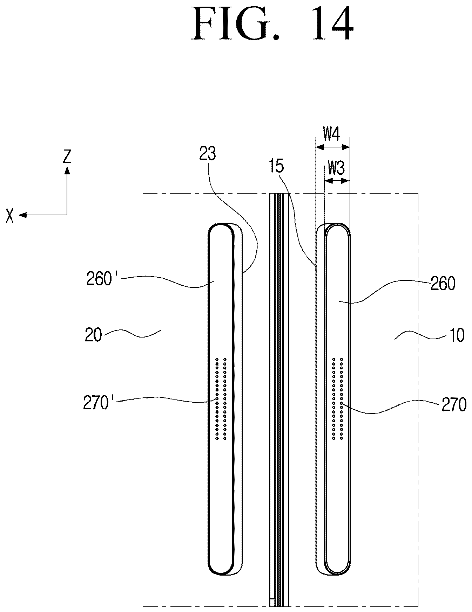

On the rear side of the first coupling member 161, a plurality of magnetic coupling grooves 161c may be provided along the longitudinal direction of the first coupling member 161 in which a plurality of permanent magnets 164 are coupled upstream and downstream of the connector coupling grooves 161a, respectively. When the first coupling member 161 is inserted into the first docking groove 260 of the first docking member 200, an attractive force may be exerted between the plurality of permanent magnets 164 of the first coupling member 161 and the plurality of permanent magnets 240 provided in the first docking member 200 (see FIG. 14) such that the first coupling member 161 is detachably coupled to the first docking member 200. Accordingly, the bridge device 100 according to an embodiment may be easily mounted to and removed from the first docking member 200 without requiring separate screws and tools for tightening and loosening the screws. The plurality of permanent magnets 164 coupled to the first connector 151 may correspond to the first reinforcement plate 141. Accordingly, the first reinforcement plate 141 may be magnetic. Accordingly, the first reinforcement plate 141 may function as a yoke to increase the magnetic force of the plurality of permanent magnets 164.

The second coupling member 162 may be coupled to the second reinforcement plate 142 through a second through-aperture 122 provided in the second cover 120. The second coupling member 162 may be removably inserted into the second docking groove 260' of the second docking member 201. The second reinforcement plate 142 may be magnetic, and the second reinforcement plate 142 may function as a yoke to increase the magnetic force of the plurality of permanent magnets 164.

The second coupling member 162 may be configured substantially the same as the first coupling member 161. For example, the second coupling member 162 may be provided with a connector coupling groove 162a at an approximately center portion of the rear surface, into which the second connector 152 is coupled. The connector coupling groove 162a may be provided with a plurality of pin apertures 162b into which the plurality of pogo pins 152a of the second connector 152 are inserted. On the rear side of the second coupling member 162, a plurality of magnet coupling grooves 162c may be provided along the longitudinal direction of the second coupling member 162, into which a plurality of permanent magnets 164 are coupled upstream and downstream of the connector coupling groove 162a, respectively.

Referring to FIG. 8, the first coupling member 161 and the second coupling member 162 may be spaced apart and disposed approximately parallel. The first coupling member 161 and the second coupling member 162 may have the same length and may be symmetrically disposed about a central axis of the first bridge device 100 (an axis of falsetto parallel to the Z-axis in FIG. 8).

Referring to FIGS. 9 and 10, the first bridge device 100 may be provided with a plurality of components stacked in a bendable state. On the front side of the first cover 110, each rear side of the bending member 130, the first reinforcement plate 141, and the second reinforcement plate 142 may be attached by the first adhesive member 133. At the center of the rear of the second cover 120, the front side of the bending member 130 may be attached by the second adhesive member 145a, and at both sides of the rear surface of the second cover 120, the front side of the first reinforcement plate 141 and the second reinforcement plate 142 may be attached by the second adhesive member 145b.

As such, the center of the first bridge device 100 may be bendable by the first cover 110, the second cover 120, and the bending member 130. On both sides of the first bridge device 100, the first coupling member 161 and the second coupling member 162 may be rigidly fixed by the first reinforcement plate 141 and the second reinforcement plate 142, respectively. Accordingly, the first bridge device 100 may be made bendable in the center and may have a predetermined strength without bending on both sides.

Hereinafter, the first docking member 200 and the second docking member 201 to which the first bridge device 100 is detachably connected electrically and physically. The second docking member 201 has substantially the same configuration as the first docking member 200 and thus, will not be described in detail.

FIGS. 11 and 12 are perspective views illustrating a docking member of a bridge device according to one or more embodiments. FIG. 13 is a view illustrating an example in which a docking member of a bridge device is elastically disposed on a display device according to one or more embodiments. FIG. 14 is a view illustrating an example in which a portion of a docking member of a bridge device is exposed to a rear surface of a display device according to one or more embodiments.

Referring to FIGS. 11 and 12, the first docking member 200 may include a printed circuit board 210, a protrusion 230 projecting from a rear surface of the printed circuit board 210, a plurality of permanent magnets 240 coupled to the protrusion 230, a plurality of first snagging protrusions 250 provided on one side of the printed circuit board 210, and a first docking groove 260 provided on a front surface of the printed circuit board 210.

The printed circuit board 210 of the first docking member 200 may be a rigid-type printed circuit board. The printed circuit board 210 of the first docking member 200 may be provided with a plurality of wiring (not shown) that are electrically connected to a plurality of terminals 270 arranged within the first docking groove 260. In this case, the plurality of wiring may be electrically connected to another printed circuit board (not shown) of the first display device 10 by a separate FPCB (not shown). A plurality of terminals 270' are also arranged in the second docking groove 260' of the second docking member 201.

The protrusion 230 of the first docking member 200 may be integrally formed into the printed circuit board 210 of the first docking member 200. The protrusion 230 may be provided with a plurality of coupling grooves 231 into which a plurality of permanent magnets 240 are coupled. The plurality of permanent magnets 240 of the first docking member 200 may be disposed to correspond respectively to the plurality of permanent magnets 164 provided on the first coupling member 161 of the first bridge device 100. Accordingly, when the first coupling member 161 of the first bridge device 100 is inserted into the first docking groove 260 of the first docking member 200, an attractive force may be exerted between the plurality of permanent magnets 240 of the first docking member 200 and the plurality of permanent magnets 164 of the first coupling member 161 such that the first coupling member 161 is detachably coupled to the first docking groove 260 of the first docking member 200. Accordingly, to order to couple and decouple the first coupling member 161 to and from the first docking groove 260 of the first docking member 200, no separate screws and tools for tightening and loosening the screws are required.

Referring to FIG. 13, a plurality of first snagging projections 250 of the first docking member 200 are connected to one end of an elastic member 253 that elastically connects the first docking member 200 to the first display device 10. The other end of the elastic member 253 may be connected to a plurality of second snagging projections 251 provided on the first display device 10. The elastic member 253 may be a coil spring, and may be provided in plurality. The first docking member 200 may slide along the X-axis direction on an inner side of the first display device 10 when the first bridge device 100 is bent. In this case, the first docking member 200 may remain coupled to the first coupling member 161 of the first bridge device 100, thereby maintaining an electrical and physical connection between the first bridge device 100 and the first display device 10.

The protrusion 230 of the first docking member 200 may be inserted into the first opening 18 provided in the first display device 10. In this case, the width W1 of the protrusion 230 of the first docking member 200 may be formed smaller than the width W2 of the first opening 18 so that the first docking member 200 may flow along the X-axis direction.

The second display device 20 may be provided with a second opening 28 into which a protrusion 230' of the second docking member 201 may be fluidly inserted. The second docking member 201 may be elastically connected slidably along the X-axis direction to the second display device 20 by a plurality of elastic members 253', as is the first docking member 200.

Referring to FIG. 14, the width W3 of the docking groove 260 of the first docking member 200 may be formed smaller than the width W4 of the first docking aperture 15 of the first display device 10. When the first coupling member 161 of the first bridge device 100 is inserted into the docking groove 260 of the first docking member 200 through the first docking aperture 15 of the first display device 10, the first coupling member 161 of the first bridge device 100 may flow along the X-axis direction with the first docking member 200 without being interrupted by the first docking aperture 15 of the first display device 10.

The width of the docking groove 260' of the second docking member 201 may be formed smaller than the width of the second docking aperture 23 of the second display device 20. Accordingly, when the second coupling member 162 of the first bridge device 100 is inserted into the docking groove 260' of the second docking member 201 through the second docking aperture 23 of the second display device 20, the second coupling member 162 of the first bridge device 100 may flow along the X-axis direction with the second docking member 201 without being interrupted by the second docking aperture 23 of the second display device 20.

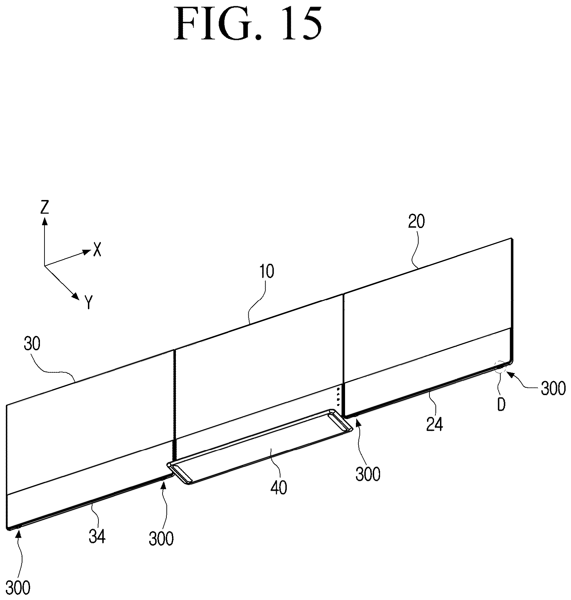

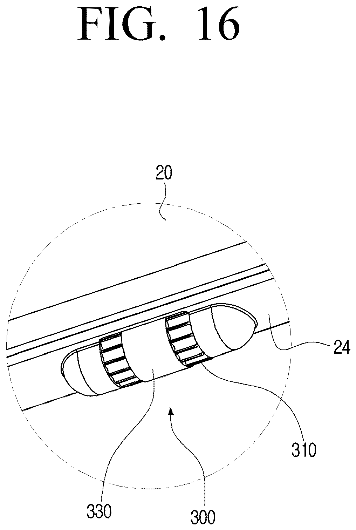

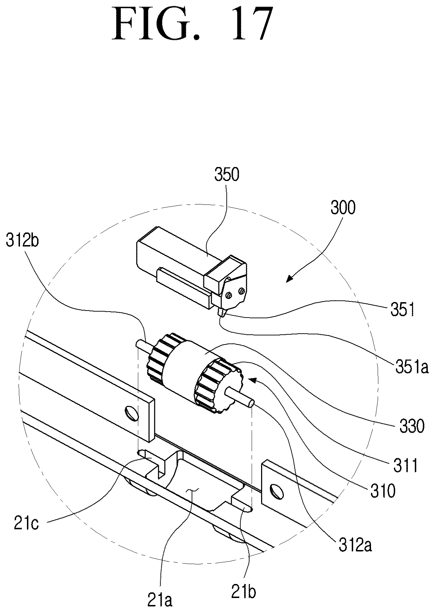

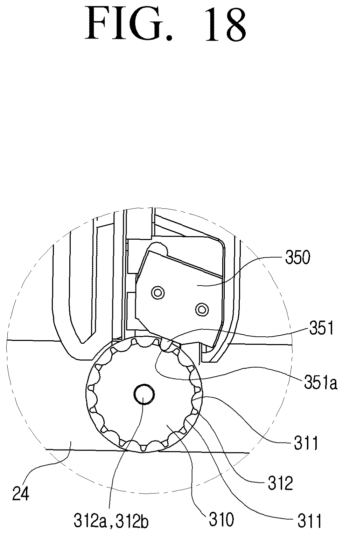

FIG. 15 is a perspective view illustrating a plurality of wheel stoppers provided in a display device according to one or more embodiments. FIG. 16 is an enlarged view illustrating part D shown in FIG. 15. FIG. 17 is an exploded view illustrating wheel stoppers provided in a display device according to one or more embodiments. FIG. 18 is a view illustrating wheel stoppers provided in a display device according to one or more embodiments.

Referring to FIG. 15, the first display device 10 may be secured to the floor via a stand 40. In this case, the second display device 20 and the third display device 30 may be provided with a plurality of wheel stoppers 300 at their respective bottoms 24, 34. The plurality of wheel stoppers 300 may support the second display device 20 and the third display device 30 such that the second display device 20 and the third display device 30 may be folded with respect to the first display device 10.

The plurality of wheel stoppers 300 may rotate while the second display device 20 and the third display device 30 are folded with respect to the first display device 10. When the folding operation of the second display device 20 and the third display device 30 stops, the plurality of wheel stoppers 300 may be locked such that the second display device 20 and the third display device 30 remain folded.

Referring to FIGS. 16 and 17, the wheel stoppers 300 may include a wheel 310, and a locker 350 for locking rotation of the wheel 310.

The wheel 310 may be rotatably disposed in a receiving aperture 21a provided in the bottom 24 of the second display device 20. Both sides of the wheel 310 may be provided with a pair of pivoting shafts 312a, 312b that are rotatably inserted into a pair of support grooves 21b, 21c extending on both sides of the receiving aperture 21a.

The wheel 310 may rotate clockwise or counterclockwise when the second display device 20 is rotated about a hinge axis H (see FIG. 5), with the second display device 20 parallel to the first display device 10, forward or backward of the second display device 20. The wheel 310 may support the second display device 20 such that the second display device 20 folds and unfolds smoothly.

The wheel 310 may have a portion of the wheel 310 protruding further than the bottom 24 of the second display device 20 while disposed in the receiving aperture 21a. When the second display device 20 is folded with respect to the first display device 10, the wheel 310 may be rotated to allow the bottom 24 of the second display device 20 to move without friction with the floor.

The outer side of the wheel 310 may be coupled with a friction member 330. The friction member 330 may surround an outer portion of the wheel 310. when the wheel 310 is locked by the locker 350, the friction member 330 may prevent the wheel 310 from rotating due to friction with the floor. Accordingly, rotation of the wheel 310 may be prevented or minimized by the friction member 330 and the locker 350, allowing the second display device 20 to remain folded at a predetermined angle.

Referring to FIG. 18, the wheel 310 may be provided with a plurality of locking grooves 311 on the outer circumference. Into the plurality of locking grooves 311 may be inserted a leading end 351a of a latch 351 coupled to the locker 350. The latch 351 may have a rear end (not shown) rotatably connected to the locker 350. In this case, the rear end of the latch 351 may be elastically connected to the locker 350 by a separate elastic member (not shown).

For example, when the second display device 20 rotates clockwise with respect to the first display device 10 while in contact with the ground, the leading end 351a of the latch 351 is pushed by the protrusions 312 between the adjacent locking grooves 311 to rotate counterclockwise and then rotated clockwise by the elastic force of the separate elastic member to return to its original position when the protrusions 312 pass over the leading end 351a of the latch 351. When the folding operation of the second display device 20 is completed and the wheel 310 is stopped because no external force is applied to rotate the wheel 310, the leading end 351a of the latch 351 is inserted into the locking groove 311 of the wheel 310. In this case, the latch 351 may prevent the wheel 310 from rotating by the elastic force of the separate elastic member. Accordingly, the second display device 20 may maintain the folded position by the plurality of wheel stoppers 300.

The plurality of stoppers 300 may be disposed on both sides of the bottom of the second display device 20 and the third display device 30, as shown in FIG. 15, but are not limited thereto. For example, the plurality of stoppers 300 may omit the stoppers 300 of the second display device 20 and the third display device 30 adjacent to the first display device 10. In addition, the plurality of stoppers 300 may have more than three stoppers 300 for each of the second display device 20 and the third display device 30 to support the weight of the second display device 20 and the third display device 30 so as to allow the second display device 20 and third display device 30 to be folded smoothly when the second display device 20 and third display device 30 are oversized.

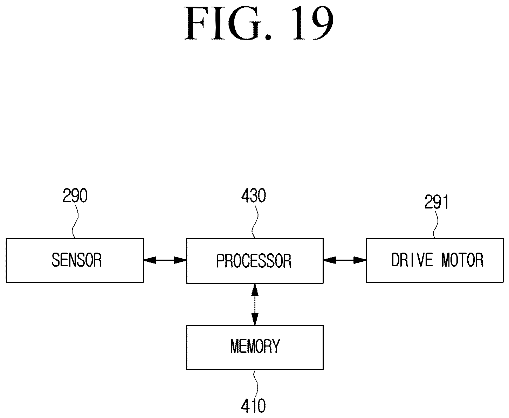

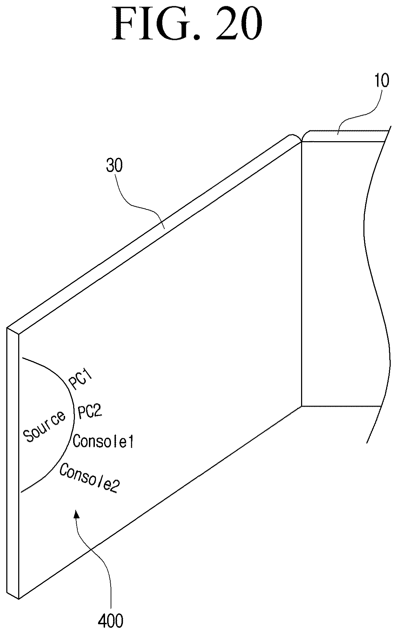

FIG. 19 is a block diagram illustrating a display device according to one or more embodiments. FIG. 20 is a view illustrating an example of a user interface for selecting various devices connected to a first display device according to one or more embodiments.

Referring to FIG. 19, a display device according to one or more embodiments, for example, the first display device 10 may include a memory 410 and a processor 430.

The memory 410 may refer to hardware that stores information, such as data, in an electrical or magnetic form for access by the processor 430 or the like. To this end, the memory 410 may be implemented as at least one of the following hardware: nonvolatile memory, volatile memory, flash memory, hard disk drive (HDD) or solid state drive (SSD), RAM, ROM, etc.

The memory 410 may store at least one instruction required for operation of the first display device 10 or the processor 430. The instruction may be is a unit of symbols that directs the operation of the display device 10 or the processor 430, and may be written in machine language, which can be understood by a computer. Alternatively, the memory 410 may store a plurality of instructions as a set of instructions that perform a specific task of the display device 10 or the processor 430. The memory 410 may store data, which is information in bits or bytes that may represent characters, numbers, images, and the like. For example, the memory 410 may store a screen setup module or the like. The memory 410 is accessed by the processor 430, and the processor 430 may read/write/modify/delete/update an instruction, a set of instructions, or data.

The processor 430 may control the overall operations of the first, second, and third display devices 10, 20, and 30. Specifically, the processor 430 may be connected to each configuration of the first display device 10 to control the overall operations of the first display device 10. For example, the processor 430 may control the second display device 20 via the first bridge device 100, and may control the third display device 30 via the second bridge device 101.

The at least one processor 430 may include one or more of a CPU, a graphics processing unit (GPU), an accelerated processing unit (APU), a many integrated core (MIC), a neural processing unit (NPU), a hardware accelerator, or a machine learning accelerator. The at least one processor 430 may control one or any combination of the other components of the first display device 10, and may perform operations or data processing related to communication. The at least one processor 430 may execute one or more programs or instructions stored in the memory 410.

The one or more processors 430 may be implemented as a single-core processor including one core, or may be implemented as one or more multi-core processors including a plurality of cores (e.g., homogeneous multiple cores or heterogeneous multiple cores). In a case where the one or more processors 430 are implemented as multi-core processors, each of the plurality of cores included in the multi-core processors may include a processor internal memory such as a cache memory or an on-chip memory, and a common cache shared by the plurality of cores may be included in multi core processors. In addition, each of the plurality of cores (or some of the plurality of cores) included in the multi-core processors may independently read and execute program instructions for implementing the method according to an embodiment, or all (or some) of the plurality of cores may be linked to each other to read and execute program instructions for implementing the method according an embodiment.

The first bridge device 100 connecting the first display device 10 and the second display device 20 may include a sensor 290 (e.g., a flex sensor) capable of detecting a folding angle of the first display device 10 and the second display device 20. The sensor 290 may be mounted on the FPCB 150, for example, where the first bridge device 100 is bent.

The sensor 290 may detect the folding angle of the first display device 10 and the second display device 20 in real time and transmit the detection value to the processor 430. The processor 430 may store the detection value transmitted from the sensor 290 in the memory 410. The processor 430 may calculate the detection value transmitted from the sensor 290 as a value corresponding to the folding angle and display the same on the first display device 10 or the second display device 20 as a number or as an image in the form of a dashboard.

The second display device 20 and the third display device 30 may each be provided with a plurality of drive motors 291 for driving the wheel 310 of the plurality of wheel stoppers 300. The processor 430 may control the forward rotation, reverse rotation, and stop operation of the plurality of drive motors 291 via the first bridge device 100 and the second bridge device 101.

The memory 410 may store at least one folding angle data entered by a user via an input device (e.g., keyboard, mouse, touch screen, etc.). The folding angle data may be at least one folding angle between the first display device 10 and the second display device 20, or at least one folding angle between the first display device 10 and the third display device 30.

The at least one folding angle data may be matched to at least one device (not shown) connected to the first display device 10 (e.g., a personal computer (PC), a console device for running a gaming application, etc.). For example, if there are at least two PCs and at least two console devices connected to the first display device 10, the processor 430 may display a user interface 400 for selecting the devices connected to the first display device 10 on the screen of the third display device 30, as shown in FIG. 20. The processor 430 may display the user interface 400 on the first display device 10 or the second display device 20 rather than the third display device 30.

When one of the devices displayed on the user interface 400 is selected by the user, the processor 430 may drive and control the plurality of drive motors 291 by determining a folding angle corresponding to the selected device among the folding angles pre-stored in the memory 410. Accordingly, the wheel 310 of the plurality of wheel stoppers 300 may be rotated by the plurality of drive motors 291 to set the second display device 20 and the third display device 30 to the folding angle corresponding to the selected device with respect to the first display device 10.

The at least one folding angle data may be matched to various applications stored in a separate memory of the at least one device connected to the first display device 10. For example, when one application stored in the at least one device is driven by the user, the processor 430 may drive and control the plurality of drive motors 291 by determining a folding angle corresponding to the driven application from among the folding angles pre-stored in the memory 410. Accordingly, the wheel 310 of the plurality of wheel stoppers 300 may be rotated by the plurality of drive motors 291 to set the second display device 20 and the third display device 30 to a folding angle corresponding to the application driven with respect to the first display device 10.

In the present disclosure, the drive motor 291 for driving the wheel 310 of the plurality of wheel stoppers 300 may be omitted. In this case, the processor 430 may detect that the second display device 20 and the third display device 30 are folded by the user via sensors 290 provided on the first bridge device 100 and the second bridge device 101, respectively. When the folding operation of the second display device 20 or the third display device 30 is detected via the sensors 290, the processor 430 may display the folding angle in real time on a screen of the display device being folded.

In another example, when a folding operation of the second display device 20 or the third display device 30 is detected via the sensors 290, the processor 430 may display the user interface 400 described above on one of the first, second, and third display devices 10, 20, and 30.

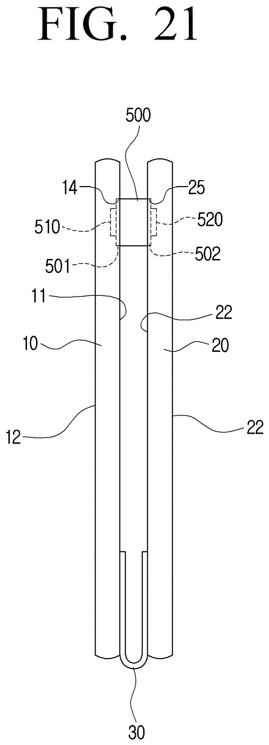

FIG. 21 is a top view illustrating an example in which a pair of display devices are folded in opposite directions from each other according to one or more embodiments.

Referring to FIG. 21, the first display device 10 and the second display device 20 may be folded such that the rear surface 11 of the first display device 10 and the rear surface 21 of the second display device 20 face each other while electrically and physically connected by the first bridge device 100.

The front surface 12 of the first display device 10 and the front surface 22 of the second display device 20 may face an opposite side from each other. In this case, the first display device 10 and the second display device 20 may maintain a folding position by a connection member 500.

The length of the connection member 500 may be substantially the same as the length of a first lid 50 (see FIG. 2). One side 501 of the connection member 500 may be inserted into a fifth docking aperture 14 of the first display device 10, and the other side 502 of the connection member 500 may be inserted into the third docking aperture 25 of the second display device 20.

The connection member 500 may be provided with a first protrusion 510 and a second protrusion 520 on both sides. The first protrusion 510 and the second protrusion 520 may be substantially equal to the length of the protrusion 51 of the first lid 50 (see FIG. 3). The first protrusion 510 and the second protrusion 520 may each be provided with a plurality of permanent magnets (not shown).

As shown in FIG. 21, when the connection member 500 is disposed between the first display device 10 and the second display device 20, an attractive force may be exerted between the plurality of permanent magnets of the connection member 500 and the plurality of permanent magnets of the docking members (not shown) provided on the first display device 10 and the second display device 20, respectively. Accordingly, the first display device 10 and the second display device 20 may maintain a folding state by the connection member 500.

When the first display device 10 and the second display device 20 are folded such that the front side 12 of the first display device 10 and the front side 22 of the second display device 20 face in opposite directions from each other, the processor 430 may display the same content on each screen of the first display device 10 and the second display device 20. For example, a consultant and a customer facing each other may conduct a consultation while viewing the same content on the first display device 10 and the second display device 20.

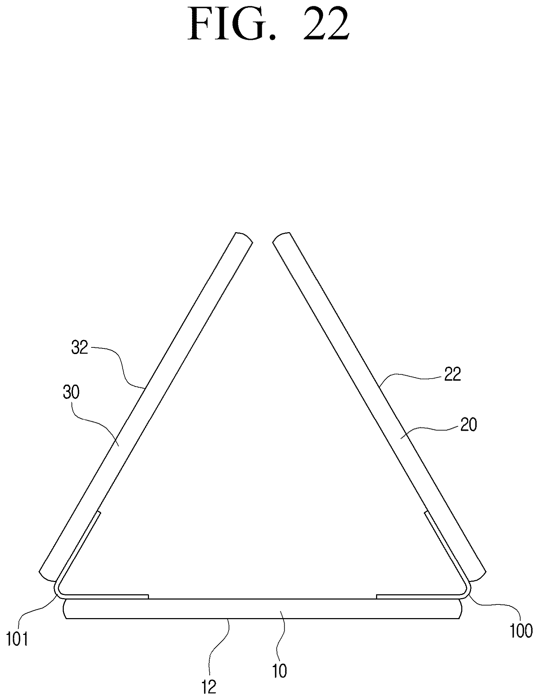

FIG. 22 is a top view illustrating an example in which three display devices are folded to form a roughly triangle shape according to one or more embodiments.

Referring to FIG. 22, the first, second, and third display devices 10, 20, and 30 may be folded such that their respective front sides 12, 22, and 32 face different directions. The second display device 20 and the third display device 30 may each be folded at approximately 60 degrees with respect to the first display device 10. The second display device 20 and the third display device 30 may maintain the folded state as shown in FIG. 22 by the plurality of wheel stoppers 300 provided at the bottom of each.

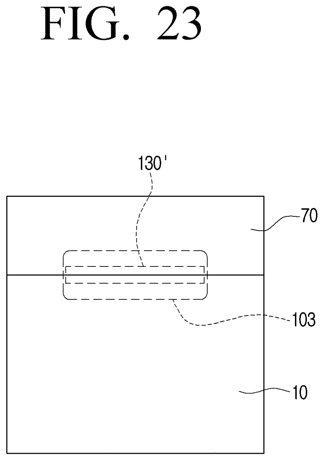

FIG. 23 is a front view illustrating an example in which an auxiliary display device is provided using a bridge device on top of a display device according to one or more embodiments.

Referring to FIG. 23, an auxiliary display device 70 may be electrically and physically connected to the top of the first display device 10 by the third bridge device 103. The size of the auxiliary display device 70 may be smaller than the size of the first display device 10.

The auxiliary display device 70 may be folded at a predetermined angle with respect to the first display device 10 by the third bridge device 103. In this case, the third bridge device 103 may be made of metal of a thickness such that a bending member 130' provided therein is bendable. The bending member 130' may prevent the auxiliary display device 70 from folding to an undesired angle due to its own weight. The configuration of the third bridge device 70 may be substantially the same in most respects as the first bridge device 10 (see FIG. 6), with the exception of the bending member 130'.

The processor 430 may control the first display device 10 and the auxiliary display device 70 to display different contents on their screens. For example, the processor 430 may control the screen of the first display device 10 to display content that is being broadcast on a first channel of a public broadcasting organization and the screen of the second display device 70 to display content that is being broadcast on a second channel of a public broadcasting organization. Alternatively, the processor 430 may control the screen of the first display device 10 to display securities-related content of a cable program and the screen of the second display device 70 to display securities-related sites on the Internet.

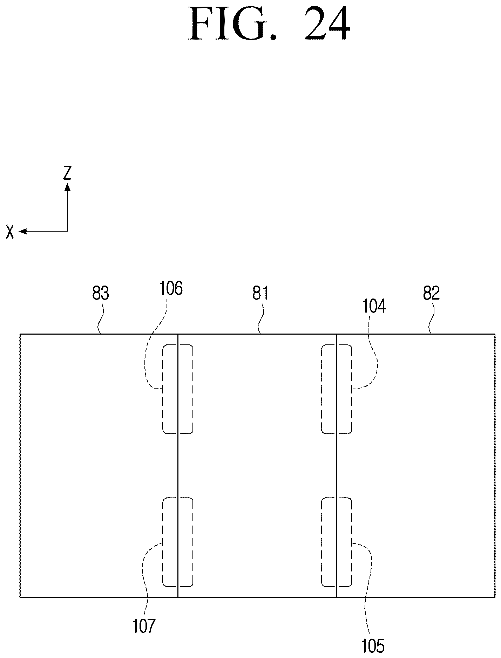

FIG. 24 is a front view illustrating an example in which a plurality of display devices are disposed in a vertical direction and each display device is connected by a plurality of bridge devices according to one or more embodiments.

Referring to FIG. 24, fourth, fifth, and sixth display devices 81, 82, 83 may be disposed in a vertical direction. The fourth display device 81 and the fifth display device 82 may be connected by the fourth and fifth bridge devices 104, 105. The fourth display device 81 and the sixth display device 83 may be connected by the sixth and seventh bridge devices 106, 107.

The fourth bridge device 104 and the fifth bridge device 105 may electrically and physically connect the fourth display device 81 and the fifth display device 82, respectively. In this case, either one of the fourth bridge device 104 and the fifth bridge device 105 may only physically connect the fourth display device 81 and the fifth display device 82. For example, the electrical connection between the fourth display device 81 and the fifth display device 82 may be made by the fourth bridge device 104, and the physical connection between the fourth display device 81 and the sixth display device 83 may be made by the fourth bridge device 104 and the fifth bridge device 105.

The sixth bridge device 106 and the seventh bridge device 107 may electrically and physically connect the fourth display device 81 and the sixth display device 83, respectively. In this case, either one of the sixth bridge device 106 and the seventh bridge device 107 may only physically connect the fourth display device 81 and the sixth display device 83.

In FIG. 24, a plurality of bridge devices are used to electrically and physically connect two display devices, but are not limited to. For example, the fourth display device 81 and the fifth display device 82 may be connected only by the fourth bridge device 104. In this case, the longitudinal length of the fourth bridge device 104 may be formed to be approximately 70 to 99% of the longitudinal length of the fourth display device 81 and the fifth display device 82 to prevent the fourth display device 81 and the fifth display device 82 from twisting in opposite directions about the x-axis of FIG. 24.

Although preferred embodiments have been shown and described above, the present disclosure is not limited to the specific embodiments described above, and various modifications may be made by one of ordinary skill in the art without departing from the spirit of the disclosure as claimed in the claims, and such modifications should not be understood in isolation from the technical ideas or views of the present disclosure.

## Claims

1. A bridge device, comprising:
a first cover having flexibility;
a second cover having flexibility;
a support member between the first cover and the second cover;
a first connector fixed to the support member; and
a second connector fixed to the support member and electrically connected to the first connector,
wherein the bridge device is configured to be connectable to a first display device and a second display device so that, when the bridge device is connected to the first display device and the second display device:
the first display device and the second display device are electrically connected through the first connector and the second connector, and
the first display device and the second display device are rotatable relative to one another due to the flexibility of the first cover and the flexibility of the second cover.

2. The bridge device of claim 1, wherein
the support member includes:
a bending member configured to be bendable,
a first reinforcement plate connected to a first side of the bending member, and
a second reinforcement plate connected to a second side of the bending member, and
the bending member is centered along a horizontal direction of the first cover and the second cover.

3. The bridge device of claim 1, wherein
the first connector includes a plurality of first terminals,
the second connector includes a plurality of second terminals,
the bridge device further includes:
a flexible printed circuit board (FPCB) connecting the first connector and the second connector, and
the FPCB includes wiring connecting the plurality of first terminals of the first connector and the plurality of second terminals of the second connector.

4. The bridge device of claim 3, wherein
each terminal of the plurality of first terminals and each terminal of the plurality of second terminals is a pogo pin.

5. The bridge device of claim 2, wherein
the first connector is detachably attachable to a rear surface of the first display device with a plurality of first permanent magnets; and
the second connector is detachably attachable to a rear surface of the second display device with a plurality of second permanent magnets.

6. The bridge device of claim 5, wherein
the first reinforcement plate and the second reinforcement plate include a magnetic material.

7. A display device, comprising:
a first display device;
a second display device; and
a bridge device detachably connected to the first display device and the second display device to electrically connect the first display device and the second display device together and so that the second display device is physically supported by the first display device,
wherein the bridge device has flexibility so that the first display device and the second display device are rotatable relative to one another.

8. The display device of claim 7, wherein
the bridge device is configured to:
connect the first display device and the second display device so that a side of the first display device and a side of the second display device facing the side of the first display device contact each other when the first display device and the second display device are rotated relative to each other at a predetermined angle, and
a tangent line of the side of the first display device and the side of the second display device facing the side of the first display device forms a center of rotation of the first display device and the second display device.

9. The display device of claim 8, wherein
the side of the first display device and the side of the second display device facing the side of the first display device are each arcuate.

10. The display device of claim 7, wherein
the bridge device includes a first connector and a second connector; and
the display device further comprises:
a first docking member on the first display device and detachably connected to the first connector of the bridge device, the first docking member configured to be movable relative to the first display device, and
a second docking member on the second display device and detachably connected to the second connector of the bridge device, the second docking member configured to be movable relative to the second display device.

11. The display device of claim 10, wherein
the first docking member is connected to the first display device so as to be slidable and elastically biased along a direction in which the first display device is rotated relative to the second display device, and
the second docking member is connected to the second display device so as to be slidable and elastically biased along a direction in which the second display device is rotated relative to the first display device.

12. The display device of claim 11, wherein
the first docking member includes a first docking groove into which the first connector is inserted,
the second docking member includes a second docking groove into which the second connector is inserted,
the first display device includes a first docking aperture on a rear surface of the first display device, the first docking aperture having a width greater than a width of the first docking groove, so that the first docking member is movable relative to the first display device, and
the second display device includes a second docking aperture on a rear surface of the second display device, the second docking aperture having a width greater than a width of the second docking groove, so that the second docking member is movable relative to the second display device.

13. The display device of claim 10, wherein
the bridge device includes:
a first cover having flexibility,
a second cover having flexibility,
a bending member having flexibility,
a first reinforcement plate connected to a first side of the bending member and to the first connector,
a second reinforcement plate connected to a second side of the bending member and to the second connector, and
a flexible printed circuit board (FPCB) connecting the first connector and the second connector,
the first display device and the second display device are electrically connected through the first connector and the second connector, and
the first cover, the second cover, and the FPCB are flexible, and the bending member is bendable, so that the first display device and the second display device are rotatable relative to one another.

14. The display device of claim 13, wherein
the first docking member and the first connector are detachably attached by a magnetic force between the first docking member and the first connector; and
the second docking member and the second connector are detachably attached by a magnetic force between the second docking member and the second connector.

15. The display device of claim 13, wherein
the first docking member includes a plurality of first terminals,
the first connector includes a plurality of first pogo pins electrically connected to the plurality of first terminals provided on the first docking member,
the second docking member includes a plurality of second terminals, and
the second connector includes a plurality of second pogo pins electrically connected to the plurality of second terminals provided on the second docking member.
